# FASCICULE DE BREVET EUROPEEN

(11) **EP 0 494 009 B1**
(45) Date de publication et mention de la délivrance du brevet: **22.03.1995**
(21) Numéro de dépôt: 91403489.7
(22) Date de dépôt: 01.01.1992
(51) Int. Cl.: B60R 22/02, B60R 22/18

(54) **Ceinture de sécurité pour siège de véhicule automobile**
Sicherheitsgurt für ein Kraftfahrzeug
Seat belt for an automotive vehicle

(30) Priorité: 04.01.1991 FR 9100057
(43) Date de publication de la demande: 08.07.1992
(73) Titulaire: REGIE NATIONALE DES USINES RENAULT S.A., 92109 Boulogne Billancourt (FR)
(72) Inventeur: Jumel, Francis, F-78200 Mantes la Ville (FR); Barbier, Jacky, F-92390 Villeneuve la Garenne (FR); Casadei, Nelson, F-92140 Clamart (FR)
(74) Mandataire: Ernst-Schonberg, Michel

(56) Documents cités:
- EP-A- 0 307 784
- DE-A- 3 510 629
- US-A- 2 898 976
- US-A- 4 400 013

## Description

L'invention concerne une ceinture de sécurité pour siège de véhicule automobile constituée par une sangle thoracique qui s'étend diagonalement devant l'occupant du siège à partir d'un ancrage latéral haut situé au-dessus de l'épaule vers un deuxième ancrage latéral bas ; une sangle de bassin qui s'étend entre un premier et ledit deuxième ancrage latéral bas ; un premier moyen connecteur coulissant qui forme la transition entre lesdites sangles, destiné à être relié à un boitier de verrouillage associé audit deuxième ancrage latéral bas ; un moyen enrouleur de la sangle, localisé sur un élément de la structure du véhicule, adjacent au siège. Ce type de ceinture de sécurité, tel que défini dans le préambule de la revendication 1, est connu par exemple de DE-A-35 10 629.

L'invention concerne plus particulièrement une telle ceinture associée à un siège dont les surfaces de charge occupent une position décalée transversalement vers le plan longitudinal médian du véhicule.

L'invention concerne également une telle ceinture associée à un siège à dossier rabattable susceptible d'occuper une position générale de rangement lorsque la partie de plancher située sous le siège constitue la surface de chargement du véhicule.

Lorsque la ceinture de ce type est montée à un emplacement relativement éloigné des parois latérales de l'habitacle, ses sangles constituent une gêne lorsque la ceinture est mise hors service. Cette gêne pour l'occupant d'une place latérale du siège est due à l'orientation des sangles consécutivement à la mise hors service de la ceinture. Cette orientation des sangles empêche par ailleurs tout mouvement de déplacement du dossier du siège vers sa position de rangement.
Pour remédier à cet inconvénient il a été proposé d'ancrer la ceinture sur le dossier du siège ou sur un élément de structure attenant. Ce type de montage est inadapté aux sièges existants.

Partant de cet état de la technique l'invention à pour objet de proposer un véhicule automobile muni d'une ceinture de sécurité qui peut occuper une position de service et une position de rangement compatibles avec les manipulations du siège.

L'invention a également pour objet de proposer un véhicule automobile muni d'une ceinture de sécurité qui peut occuper une position de rangement localisée hors du champ de déplacement du dossier du siège et/ou du champ de vision offert par la lunette arrière.

Selon l'invention telle que definie dans la revendication 1, l'extrémité de la sangle porte un moyen connecteur distinct destiné à être relié au premier ancrage latéral bas de la sangle de bassin. La ceinture de sécurité ainsi réalisée possède une position indépendante de rangement sans gêner ni l'occupant du siège sanglé à sa place latérale ou entraver le mouvement de basculement du siège, et elle porte un ancrage de renvoi fixé sur un élément de la structure du véhicule au dessus de l'épaule de l'occupant du siège. Cet ancrage possède une structure apte à réaliser une absorption d'énergie consécutivement à un effort de flexion exercé sur la sangle thoracique.

La ceinture de sécurité proposée possède une efficacité accrue notamment sous l'effet des efforts transversaux consécutifs aux déplacement latéraux du buste de l'utilisateur par rapport à la paroi de l'habitacle, à la suite d'une percussion latérale du véhicule.

D'autres caractéristiques et avantages de l'invention apparaitront à la lecture de la description d'un exemple de réalisation de la ceinture de sécurité en référence au dessin annexé dans lequel:
- la figure 1 est une représentation schématique d'une implantation de la ceinture de sécurité en position d'utilisation sur la place centrale d'une banquette à trois places d'un véhicule automobile,
- la figure 2 est une représentation schématique de l'implantation représentée figure 1 en position de rangement de la ceinture de sécurité objet de l'invention,
- la figure 3 est une représentation schématique de la déflection de la ceinture de sécurité conforme à l'invention au cours d'une percussion latérale du véhicule,
- la figure 4 est une représentation schématique de la ceinture de sécurité au cours de sa mise en position d'utilisation,
- la figure 5 est une section de la structure de montage de l'ancrage de renvoi.

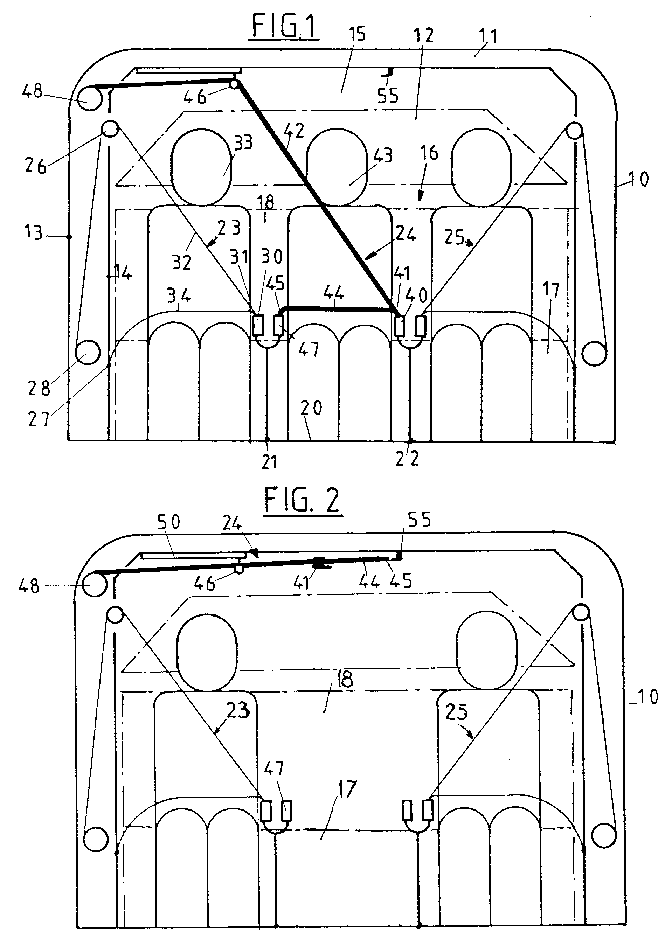

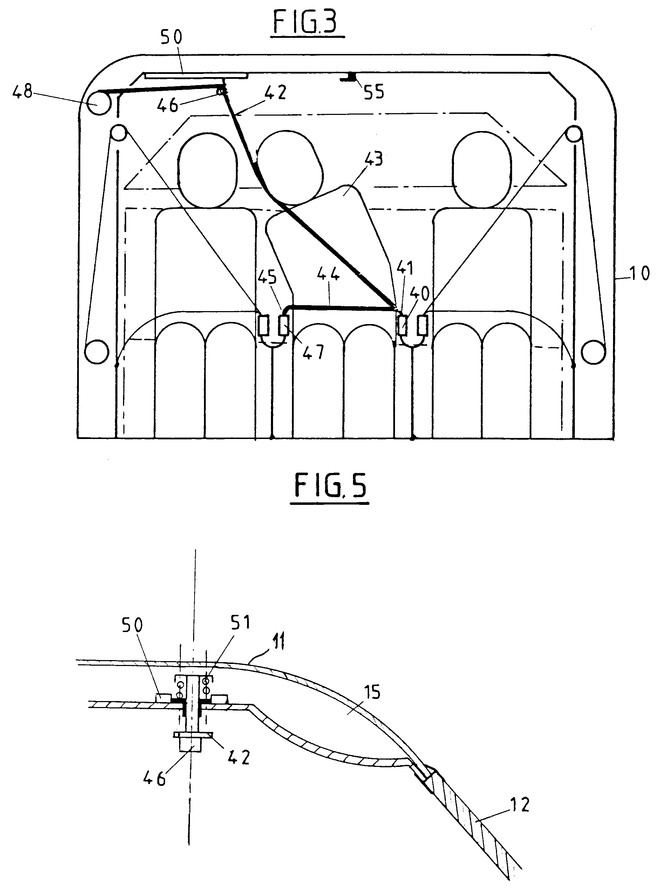

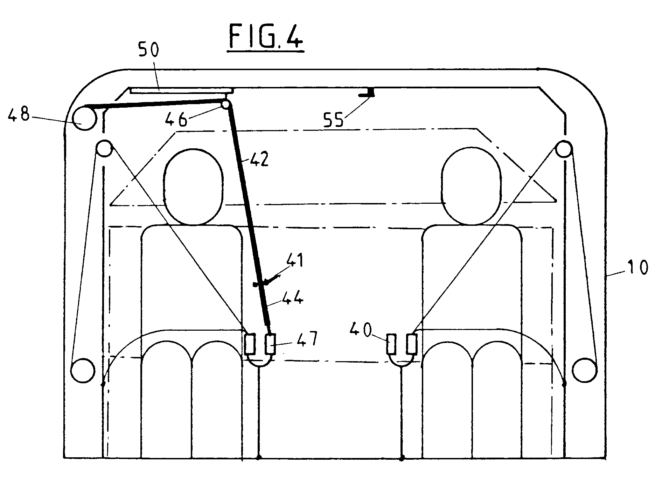

Sur les figures 1 à 4, la référence 10 désigne la carrosserie d'un véhicule automobile dont on a représenté la partie arrière de l'habitacle.

La carrosserie 10 est ici matérialisée par son pavillon 11, la lunette arrière 12, une paroi latérale extérieure 13 et une paroi latérale intérieure 14. La paroi latérale intérieure et le pavillon 11 sont assemblés au niveau du bord supérieure de la lunette 12 et forment une traverse de structure 15.

Ainsi que cela ressort du dessin le siège arrière 16 est constitué à titre d'exemple par une assise 17 à trois places et par un dossier 18 en une ou deux parties.
L'assise 17 est supportée par un plancher 20 portant des ancrages latéraux bas 21, 22 de trois ceintures de sécurité 23, 24, 25.

A titre d'exemple, les ceintures de sécurité 23, 25 sont des ceintures conventionnelles à enrouleur à quatre ancrages constitués par:
- un ancrage de renvoi latéral extérieur haut 26 monté sur la paroi 14,
- un ancrage latéral extérieur bas 27 monté sur la paroi 14,
- un ancrage de l'enrouleur 28 rapporté sur la paroi 14,
- un ancrage latéral bas intérieur matérialisé par un boitier de verrouillage 30 dans lequel est engagé un pène connecteur 31. Le pène connecteur 31 coulisse sur la sangle de la ceinture de sécurité et forme la transition entre:
   - une sangle thoracique 32 qui s'étend diagonalement en service devant un occupant 33 à partir de l'ancrage latéral haut 26 situé au dessus de l'épaule, vers le boitier 30,
   - une sangle de bassin 34 qui s'étend entre l'ancrage 27 et le boitier 30.

La ceinture de sécurité 24 conforme à l'invention s'apparente à la ceinture telle que 23 et possède de ce fait l'avantage de pouvoir être fabriquée aisément à l'aide de composants connus.

Ainsi que cela est montré à la figure 1
- la sangle thoracique 42 s'étend diagonalement en service devant l'occupant 43 à partir de l'ancrage de renvoi latéral extérieur haut 46 monté sur la traverse de structure 15 vers un deuxième ancrage latéral bas matérialisé par un boitier de verrouillage 40 associé à l'ancrage 22, dans lequel est engagé un pène connecteur 41.
- Le pène 41 peut coulisser sur la sangle 42 et forme comme précédemment décrit, la transition entre ladite sangle 42 et une sangle de bassin 44 qui s'étend entre le boitier 40 et un boitier 47 accolé au boitier 30 dans lesquel est engagé un pène connecteur 45. Le boitier 47 est disposé à côté du boitier de verrouillage 30 de la ceinture 23 précédemment décrite et est relié à titre d'exemple à l'ancrage 21 par tout moyen connu (portion de sangle).
- Un ancrage d'enrouleur 48 de la sangle est également localisé sur la traverse de structure 15 dans le but de limiter la longeur utile de la sangle nécessaire à la mise en service de la ceinture de sécurité.

Selon l'invention l'extrémité de la sangle 44 porte un deuxième moyen correcteur qui peut être matérialisé par le pène 45. Dans ce cas le pène 45 est connecté au boitier 47 mais il est bien évident que la sangle pourra porter au choix soit le pène 45 soit un boitier tel que 47 destiné à s'enclancher dans ce cas sur un pène relié à l'ancrage 21.

Selon une autre caractéristique de l'invention, l'ancrage de renvoi 46 possède une propriété d'absorption d'énergie consécutivement à un effort de flexion exercé sur la sangle thoracique 42.

A cet effet l'ancrage de renvoi est mobile le long d'une coulisse 50 de réglage de position, rigidement reliée à la structure 15 et est constitué par un chariot 51 porteur de l'ancrage 46. Sous l'effet de l'effort exercé par l'épaule ou la tête de l'occupant 43, le chariot 51 se déplacera dans la coulisse 50. L'effort résiduel exercé sur la sangle 42 sera alors considérablement réduit par rapport à l'effort initial.

Sans sortir du cadre de l'invention, il sera également possible de modifier le montage du chariot 51 dans le but de faire participer la structure 15, la coulisse 50 ou le chariot 51 à une dissipation d'énergie libérée par la contrainte exercée par l'occupant 43 sur la ceinture.

Dans le but de permettre le rabattement du dossier 18 et pour ne pas géner l'occupant 33 en cas de non utilisation de la ceinture 24, le pène 45 peut occuper une position indépendante de rangement.

A cet effet la structure 15 porte un moyen d'attache ou de fixation 55 du deuxième moyen connecteur (pène ou boitier) situé au dessus de la lunette arrière 12 hors du champ de déplacement du dossier 18 et/ou du champ de vision offert par la lunette arrière 12.

A titre d'exemple le pène 45 peut être accroché sur un support coopérant fixé sur l'élément de structure 15.

## Revendications

1. Véhicule automobile muni d'une ceinture de sécurité de rétention d'un occupant sur un siège comportant une assise et un dossier, ladite ceinture étant constituée par:
- une sangle thoracique (42) qui s'étend diagonalement en service devant l'occupant à partir d'un ancrage de renvoi (46) latéral haut situé au-dessus de l'épaule et fixé sur un élément de structure (15) du véhicule, vers un deuxième ancrage (22) latéral bas,
- une sangle de bassin (44) qui s'étend entre un premier ancrage (21) et ledit deuxième ancrage (22) latéral bas et qui porte un deuxième moyen connecteur (45) destiné à être relié au premier ancrage (21) latéral bas,
- un premier moyen connecteur (41) coulissant qui forme la transition entre lesdites sangles (42, 44) destiné à être relié à un boitier de verrouillage (40) associé audit deuxième ancrage (22) latéral bas,
- un moyen enrouleur (48) de la sangle, localisé sur un élément de la structure (15) du véhicule adjacent au siège, caractérisé par le fait que l'ancrage de renvoi (46) est porté par une traverse (15) de structure du véhicule et possède une propriété d'absorption d'énergie consécutivement à un effort de flexion exercé sur la sangle thoracique (42).

2. Véhicule selon la revendication 1, caractérisée par le fait que l'ancrage de renvoi (46) est monté le long d'une coulisse de réglage (50) de position.

3. Véhicule selon l'une quelconque des revendications 1 à 2, caractérisée par le fait que le deuxième moyen connecteur (45) possède une position indépendante de rangement localisée hors du champ de déplacement du dossier (18) du siège et/ou du champ de vision offert par la lunette arrière (12).

4. Véhicule selon l'une quelconque des revendications 1 ou 3, caractérisée par le fait que l'élément de structure (15) porte un moyen d'attache du deuxième moyen connecteur (45).

5. Véhicule selon l'une quelconque des revendications 1 ou 3, caractérisée par le fait que le deuxième moyen connecteur (45) et/ou l'élément de structure (15) porte un moyen de fixation (55).

## Claims

1. Automotive vehicle fitted with a safety belt for retaining an occupant in a seat comprising a squab and a back rest, said belt being composed of:
- a thoracic strap (42) which, in use, extends diagonally in front of the occupant from a high, lateral, return mechanism anchor point (46) located above the shoulder and fixed onto a structural element (15) of the vehicle, to a low, lateral, second anchor point (22),
- a pelvic strap (44) which extends between a first anchor point (21) and said low, lateral, second anchor point (22) and which carries a second connection means (45) for connection to the first, low, lateral anchor point (21),
- a first sliding connecting means (41) which forms the transition point between said straps (42, 44) for connection to a lock housing (40) associated with said low, lateral, second connection means (22),
- a reel mechanism (48) for the strap, located on a structural element (15) of the vehicle, adjacent to the seat, characterised by the fact that the return mechanism anchor point (46) is supported by a structural crosspiece (15) of the vehicle and possesses an energy absorbing property following the exertion of flexion stress on the thoracic strap (42).

2. Vehicle according to claim 1, characterised by the fact that the return mechanism anchor point (46) is mounted along a position regulating slide (50).

3. Vehicle according to any one of claims 1 to 2, characterised by the fact that the second connecting means (45) has an independent stowed position located outside the field of displacement of the back rest (18) of the seat and/or the field of vision provided by the rear window (12).

4. Vehicle according to any one of claims 1 or 3, characterised by the fact the structural element (15) carries a means for attachment of the second connecting means (45).

5. Vehicle according to any one of claims 1 or 3, characterised by the fact that the second connecting means (45) and/or the structural element (15) carries a fixing means (55).

## Patentansprüche

1. Kraftfahrzeug mit einem Sicherheitsgurt zur Zurückhaltung eines Inassen auf einem Sitz, der eine Sitzfläche und eine Rückenlehne aufweist, wobei der Sicherheitsgurt aufweist:
- einen Schultergurt (42), der sich im angelegten Zustand diagonal vor dem Insassen erstreckt von einer seitlichen, oberen, oberhalb der Schulter vorgesehenen und an einem Strukturteil (15) des Kraftfahrzeugaufbaus befestigten Halte- und Umlenkanordnung (46) aus, zu einer zweiten, seitlichen, unteren Verankerungsanordnung (22),
- einen Beckengurt (44), der sich von einer ersten Verankerungsanordnung (21) aus zur zweiten, seitlichen, unteren Verankerungsanordnung (22) erstreckt und der eine zweite Verschlußanordnung (45) aufweist zur Verbindung mit der ersten, seitlichen, unteren Verankerungsanordnung (21),
- eine erste, gleitende Verschlußanordnung (41), welche die Verbindung zwischen den Gurten (42, 44) darstellt und die zur Verbindung mit einem Verriegelungsgehäuse (40) dient, das der zweiten, seitlichen, unteren Verankerungsanordnung (22) zugeordnet ist und
- einen Gurtaufroller (48), der an einem Teil des Kraftfahrzeugaufbaus (15) in der Nähe des Sitzes vorgesehen ist, dadurch gekennzeichnet, daß die Halte- und Umlenkanordnung (46) von einer Strebe (15) des Kraftfahrzeugaufbaus getragen wird und daß sie ein Energieabsorptionsvermögen besitzt, bezüglich einer auf den Schultergurt (42) einwirkenden Verformung.

2. Fahrzeug nach Anspruch 1, dadurch gekennzeichnet, daß die Halte- und Umlenkanordnung (46) entlang einer ihre Position regelbaren Gleitstange (50) angeordnet ist.

3. Fahrzeug nach einem der Ansprüche 1 und 2, dadurch gekennzeichnet, daß die zweite Schließanordnung (45) eine unabhängige Aufbewahrstellung einnimmt, die außerhalb des Verschiebebereichs der Rückenlehne (18) des Sitzes und/oder des durch das rückwärtige Fenster (12) begrenzten Gesichtsfeldes liegt.

4. Fahrzeug nach einem der Ansprüche 1 oder 3, dadurch gekennzeichnet, daß das Strukturteil (15) eine Befestigungsanordnung für die zweite Schließanordnung (45) aufweist.

5. Fahrzeug nach einem der Ansprüche 1 oder 3, dadurch gekennzeichnet, daß die zweite Schließanordnung (45) und/oder das Strukturteil (15) eine Befestigungsanordnung (55) trägt.
